# EUROPEAN PATENT APPLICATION

(11) **EP 2 853 328 A1**
(43) Date of publication of application: **01.04.2015**
(21) Application number: 14186099.9
(22) Date of filing: 24.09.2014
(51) Int. Cl.: B23B 51/04, B23B 27/14

(54) **A deep hole drill tool**

(30) Priority: 27.09.2013 SE 1351118
(71) Applicant: Sandvik Intellectual Property AB, 811 81 Sandviken (SE)
(72) Inventor: Lawes, Simon, Dursley, Gloucestershire GB-GL11 5TD (GB); Hout, Jason, Masiillon OH, OH Ohio US-44647-5174 (US)

(57) **Abstract**

The invention relates to a deep hole drill tool of the type that comprises a basic body, a cutting insert (2) having a cutting edge, which is formed between a chip surface (21) and a clearance surface (19). The chip surface (21) comprises a chamfer surface (23) adjacent to the cutting edge (20) and the clearance surface (19), the chamfer surface (23) having a width of at least 0,1 mm defined between two boundary lines (24, 25), and which, in each infinitesimal part along the cutting edge, forming an angle (γ) of at least 25° and at most 50° with a reference plane (RP) extending perpendicular to the centre or rotation axis of the tool.

## Description

### Technical Field of the Invention

This invention relates to a deep hole drill tool of the type that comprises a basic body having a centre axis, toward which an imaginary reference plane extends at a right angle, a cutting insert of a material that is harder than the material of the basic body, and which includes a front side, a back side, and a cutting edge formed between a chip surface included in the front side and a clearance surface, which extends from the chip surface toward the back side, the cutting edge running inward from a peripherally outer end situated along the basic body to an inner end. The invention also relates to a cutting insert for the deep hole drill tool.

### Background of the Invention

The difference between deep hole drilling and short hole drilling in respect of the tools that are used for the respective operations is now - within modem drilling technology - partly fluid. An accepted rule of thumb is, however, that deep hole drilling aims at providing hole depths of at least 5 × the hole diameter D, and at times more than 100 × D, or greater. For solid drilling of deep holes, a plurality of different tools may be used, which may be divided into different categories depending on, among other things, whether the chip evacuation takes place externally of or internally through the drilling tool. In the first-mentioned case, usually so-called gun drills are used, through which cutting fluid is supplied internally through the tool, and which include an external chip flute, through which the removed chips are returned in the backward direction through the drilled hole. In other drilling tools, the cutting fluid supply takes place externally of the tool and the chip evacuation internally through the tool, according to two different systems denominated STS (single tube system) and the so-called ejector system, respectively.

A problem difficult to master for many forms of deep hole drilling is the chip formation, more precisely the ability of the drilling tool to break up the removed chips into smaller fragments. Namely, if the chips are removed and allowed to develop without any chip breaking obstacles, the same will form long, almost endless and thread-like formations. This leads to a number of difficulties, not only so far that the chips may jam in the drilling tool and/or in the drill hole without even being evacuated from the last-mentioned one, or - most common - that the same form unsuitable, tangled balls, which makes it more difficult, or even impossible, to transport the chips away from the present, most often built-in machine, e.g. a CNC machine or a multi operation machine.

A general aim of designers of deep hole drill tools as well as other cutting tools for the machining of metallic workpieces has usually been to make the tools as easy-cutting as possible, more precisely by giving the cutting edges of the tools a positive cutting geometry, in the form of an acute wedge angle (= the angle between the chip surface of the cutting edge and its clearance surface). Such a cutting geometry may, however, give rise to mediocre or poor chip breaking in connection with the machining of certain types of materials, such as stainless steel, low-carbon steel and the like, in particular if the selected feeding is moderate and, therefore, generates thin chips.

It should, in this context, also be mentioned that the cutting edges of previously known deep hole drill tools could be strengthened in various ways, e.g. by means of cutting edge roundings, which, instead of giving a cutting edge sharp as a razor adjacent to the cutting edge line, gives a radius in the order of 0,01-0,05 mm in the transition between the chip surface and the clearance surface. Also so-called reinforcement bevels having a width of up to 0,05 mm are found. Diminutive cutting edge-reinforcements of this type have, however, no appreciable impact on the generally positive cutting geometry of the cutting edges and their easy-cutting ability; this is something that means that the cutting edges have mediocre chip breaking ability.

With the aim of managing the chip breaking problems, which are particularly problematic in connection with deep hole drill tools, attempts have previously been made to form the cutting inserts of the tools with different types of chip breakers. Common to such chip breakers - irrespective of whether they are separate or integrated with the cutting insert - is that the same are situated at a certain distance behind the cutting edge line of the cutting edges, involving that the sheared chip in spite of all will slide more or less far along the chip surface before it impinges on the chip breaker. In certain applications, such chip breakers may give an acceptable fragmentation of the chips into smaller fragments, but in other applications, where the material is long-chipping and the chips are thin, the chips will have time to develop without being broken. In other words, the same may freely curl away into a long thread formation difficult to master.

### Objects and Features of the Invention

The present invention aims at obviating the above-mentioned shortcomings of previously known deep hole drill tools and at providing an improved tool of this specific type as well as cutting insert for the deep hole drill tool. Therefore, a primary object of the invention is to provide a deep hole drill tool and cutting insert, which has the ability to efficiently split the removed chip into small fragments, which can be freely evacuated out of the drilled hole irrespective of its length, so as to enable a likewise interference-free forwarding to a depot via a traditional chip conveyor. A further object is to provide a deep hole drill tool and cutting insert, which produces short, small chips without making the tool too blunt-cutting. Also, the invention aims at attaining the above-mentioned objects by means of a tool and insert, which is structurally simple and for this reason can be manufactured in a cost-effective way.

According to the invention, at least the primary object is attained in a surprisingly easy way by the chip surface of the cutting insert comprising a chamfer surface adjacent to the cutting edge and the clearance surface thereof, the chamfer surface having a width of at least 0,1 mm defined between two boundary lines, and which, in each infinitesimal part along the cutting edge, forming an angle of at least 25° and at most 50° with the reference plane. In such a way, the shear plane of the chip is forced to form an angle (= shear plane angle) in relation to the workpiece that is considerably smaller than the corresponding shear plane angles at which the wedge angle is acute and the cutting geometry thereby positive. This means that the chip immediately in connection with the removal is curved backward and directed toward the unmachined surface of the workpiece, rather than just sliding forth along the chip surface of the cutting insert. The consequence of this will be that the chip, upon its (powerful) impact against the unmachined metal, is broken up against the surface thereof. In other words, the chip will be broken off or shattered into small fragments, rather than curling further in a near endless, thread-like formation.

In an embodiment, the width of the chamfer surface amounts to at least 0,2 mm. In this way, the chip breaking is enhanced by the increase in the minimum width on the chamfer surface.

In a further embodiment, the width of the chamfer surface amounts to at most 0,5 mm. In such a way, an acceptable compromise in practical production is obtained between the desires to, on the one hand, break the chip into small fragments, and, on the other hand, maintaining a reasonably easy-cutting ability of the cutting insert.

In a further embodiment, the chamfer surface is forming the angle of at least 30° and at most 40° with said reference plane. In such a way, an acceptable compromise is also obtained between the desires to, on the one hand, break the chip into small fragments, and, on the other hand, maintaining a reasonably easy-cutting ability of the cutting insert.

In a further embodiment, the chamfer surface has a uniform width along its entire length extension. In such a way, the chip will be broken up uniformly along its entire width.

In a further embodiment, the invention is applied to a deep hole drill tool, the basic body of which includes, on one hand, three seats for the same number of cutting inserts, *viz*. a peripheral cutting insert, a centre insert, and an intermediate insert, and, on the other hand, a central hollow space for the internal evacuation of chips from the cutting inserts, not only the cutting edge of the peripheral cutting insert, but also at least the one of the intermediate insert including a chamfer surface of the above-mentioned type.

By forming not only the peripheral cutting insert but also the intermediate insert in accordance with the invention, a good chip breaking in total is attained as a consequence of the fact that the orbital running speed of the peripheral cutting insert is greater than the orbital running speed of the intermediate insert, which in turn is greater than the one of the centre insert (at one and the same number of revolutions).

In another embodiment, the front side transforms into the chip surface via a concavely arched transition surface from which the chip surface extends up to the chamfer surface. The arched transition surface serves as chip breaker in many operational cases and materials. However, it works poorer at, for instance, low feedings and low-carbon steel. This is an example of a main application area for a deep hole drill tool according to the invention. In that context, the chip surface is formed with the above mentioned chamfer surface for guaranteeing the chip breaking in these specific operational cases/materials. Moreover, it may be mentioned that the chip surface also may form a continuously concavely arched surface together with the transition surface up to the chamfer surface.

In still an embodiment, the chip surface extends, between the transition surface and the chamfer surface, flat and parallel to an axial plane running parallel to the centre axis. In such a way, an excessive chip breaking (also called over breaking) is avoided. In certain materials and operational cases, the chip should not be broken too strongly, since this will decrease the service life of the cutting insert as well as cause vibrations and disturbing sound/noise during the machining.

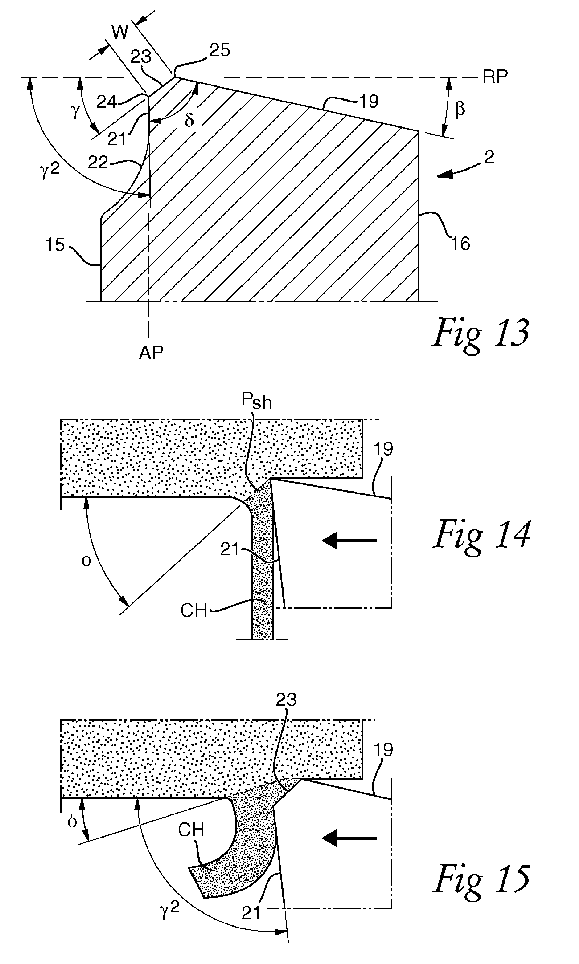

In another embodiment, the chip surface between the transition surface and the chamfer surface instead extends angularly with an axial plane running parallel to the centre axis. In such a way, for instance, a more positive cutting geometry can be provided by the chip surface forming an obtuse angle with the reference plane (see Fig. 15). In other words, a so-called positive rake angle is provided by increasing the pitch of the downhill slope that the chip surface forms from the chamfer surface toward the concave the transition surface. In this way, a more easy-cutting geometry is achieved, which can compensate for the chamfer surface to a certain extent giving a more blunt-cutting cutting edge.

### Prior Art

Deep hole drill tools as well as other drilling tools having hard cutting inserts of different design are previously known by US 5302060, US 2011/0268519, EP0775547, EP1902799, US 6039515, and US 4776732. However, in none of these known drilling tool designs, there is any chamfer surface in the cutting inserts of the type that is defined in the subsequent claims. In other words, the chip breaking ability of the known drilling tools is mediocre.

### Brief Description of the Appended Drawings

In the drawings:
- Fig. 1: is a bird's eye view of a deep hole drill tool formed in accordance with the invention in the form of a drill head (in all figures, the tool is turned with its front end or tip upward),
- Fig. 2: is a side view of the tool according to Fig. 1,
- Fig. 3: is an end view from above of the same tool,
- Fig. 4: is an enlarged bird's eye view, in which geometric fixed points have been inserted,
- Fig. 5: is an additional side view, which is rotated 90° in relation to the side view according to Fig. 2,
- Fig. 6: is a perspective exploded view showing three cutting inserts separated from the basic body of the tool,
- Fig. 7: is a further end view showing the tool at another angle of rotation than in Fig. 3,
- Fig. 8: is a section VIII-VIII in Fig. 7,
- Fig. 9: is an enlarged front view of a peripheral cutting insert included in the drilling tool,
- Fig. 10: is a section X-X in Fig. 9,
- Fig. 11: is a front view of an intermediate insert included in the tool,
- Fig. 12: is a section XII-XII in Fig. 11,
- Fig. 13: is a detailed enlargement showing the design of the type of cutting edge that is included in the peripheral and intermediate inserts according to Figs. 9/10 and Figs. 11/12, respectively,
- Fig. 14: is a schematic illustration of the design and function of the cutting edge in conventional, previously known cutting inserts for deep hole drill tools, and
- Fig. 15: is a corresponding illustration of the function of the cutting edge according to the invention in connection with chip breaking.

### Detailed Description of an Embodiment of the Invention

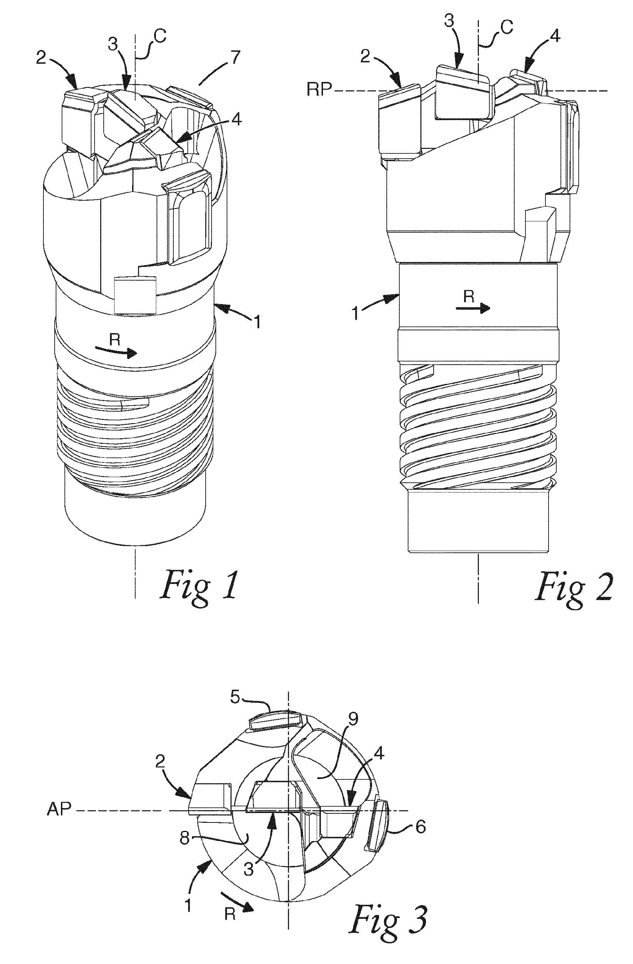

In the subsequent figures 1-13, the invention is shown applied to a deep hole drill tool of STS type, more precisely in the form of a basic body 1 (which by those skilled in the art also is denominated "drill head" or "tool body"), which in a usable state is applied to the front end of a tube (not shown), the length of which depends on the desired hole depth. In this case, the basic body 1 is equipped with three cutting inserts, *viz*. a peripheral cutting insert 2, a centre insert 3, and an intermediate insert 4. In the tool, also two peripheral pads are included, *viz*. a support pad 5 and a guide pad 6. Generally, the cutting inserts 2, 3, 4 as well as the pads 5, 6, are manufactured from materials that are harder and more wear-resistant than the material of the basic body 1. Usually, the hard material consists of cemented carbide and the material of the basic body of steel, e.g. powder steel of the type high speed steel (HSS).

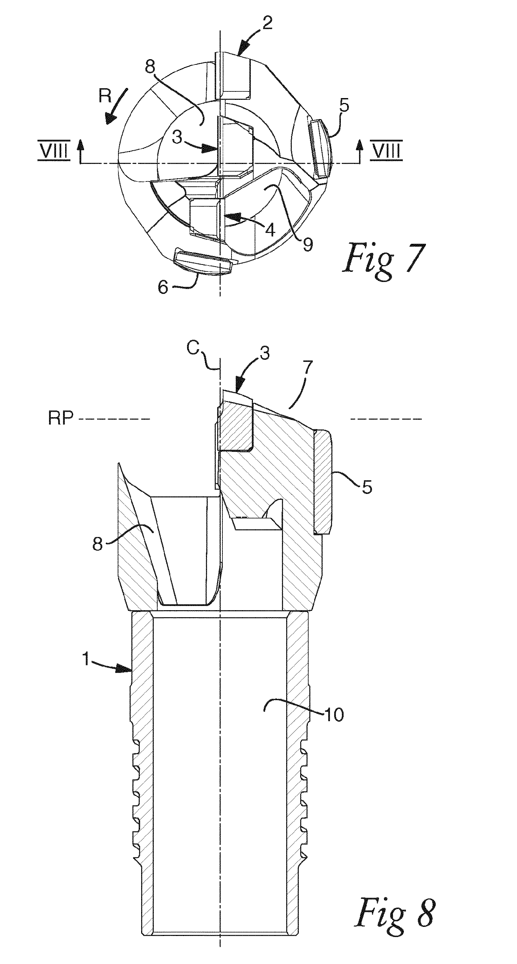

All cutting inserts are placed in a front end 7 of the basic body (see Figs. 1 and 8). The peripheral and centre inserts 2, 3 are located adjacent to a first inlet 8, and the intermediate insert 4 adjacent to a second inlet 9. These inlets open into a common, cylindrical hollow space 10, which forms a chip evacuation channel running axially through the basic body. In STS drilling, the requisite cutting fluid is supplied externally to the cutting inserts, *viz*. in the ring-shaped slit between the outside of the tube/basic body and the surrounding hole wall, while the chips removed by the cutting inserts are evacuated internally through the hollow space 10 and the subsequent tube.

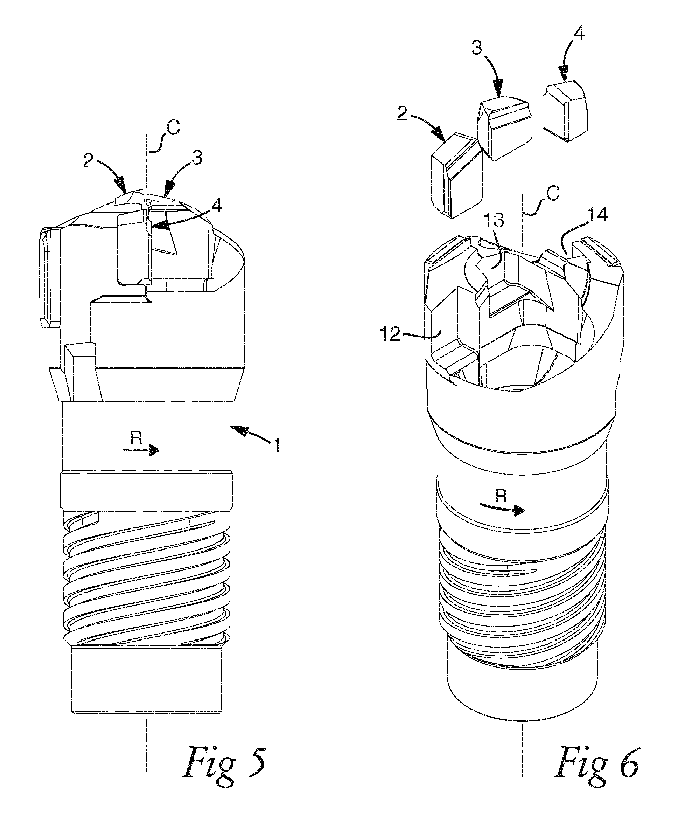

In the example, the cutting inserts 2, 3, 4 are connected by brazing, and thereby at least semi-permanently fixed to the basic body. More precisely, the cutting inserts are placed in pockets 12, 13, 14 (see Fig. 6), each one of which includes three flat surfaces, to which three, likewise flat surfaces of the individual cutting insert can be brazed. The invention is however also applicable on exchangeable cutting inserts designed with for instance screw holes for fastening the inserts to the basic body by means of screws.

The basic body 1 has a generally rotationally symmetrical shape. More precisely, the external part surfaces, which are situated axially behind the cutting inserts and the pads, are rotationally symmetrical in respect of a centre axis C. In this connection, it should be mentioned that deep hole drilling makes use of a relative rotation between the tool and the workpiece, either by the tool being rotated (but not the workpiece), or (most common) by the workpiece being rotated, but not the tool. Also a combination of these rotary motions is found. The requisite feeding is most often carried out by the tool being pressed into the workpiece. All these operations are made with the centre axis C as a geometric fixed point.

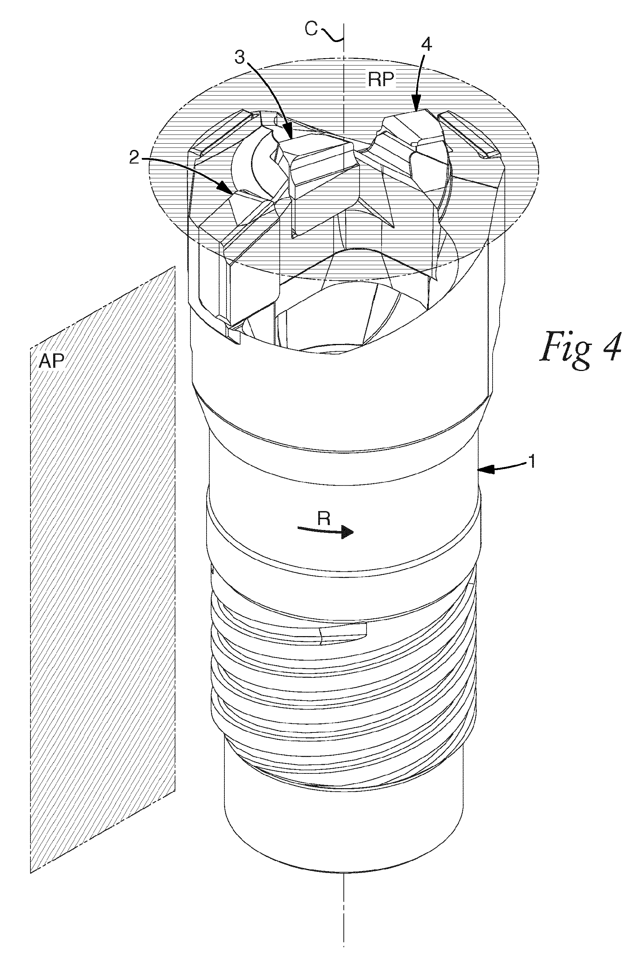

In Fig. 4, two imaginary, geometrical planes are shown, *viz*. on one hand a reference plane (radial plane) designated RP, which extends perpendicular to the centre axis C, and in the example is placed on a level with the peripheral cutting insert 2, and on the other hand an axial plane, designated AP, running parallel to the centre axis C.

The basic shape of the different cutting inserts can be represented by, for instance, the shape of the peripheral cutting insert 2. Thus, like the other cutting inserts, the peripheral cutting insert includes a front side, generally designated 15, and a back side 16. In the example, these are flat and mutually parallel. In addition, the cutting insert is delimited by two flat and mutually parallel side surfaces 17a, 17b, an end surface 18, as well as a front surface in the form of a clearance surface 19. A cutting edge in its entirety designated 20 is formed between the clearance surface 19 and a chip surface 21 included in the front side 15.

In the example, the front and back sides 15, 16 of the cutting insert 2 run parallel to the centre axis C. More precisely, the front side as well as the back side is parallel to the axial plane AP. It should also be mentioned that the chip surface 21 in this case is flat and parallel to the surfaces 15, 16, as well as transforms into the front side 15 via a concavely arched transition surface 22.

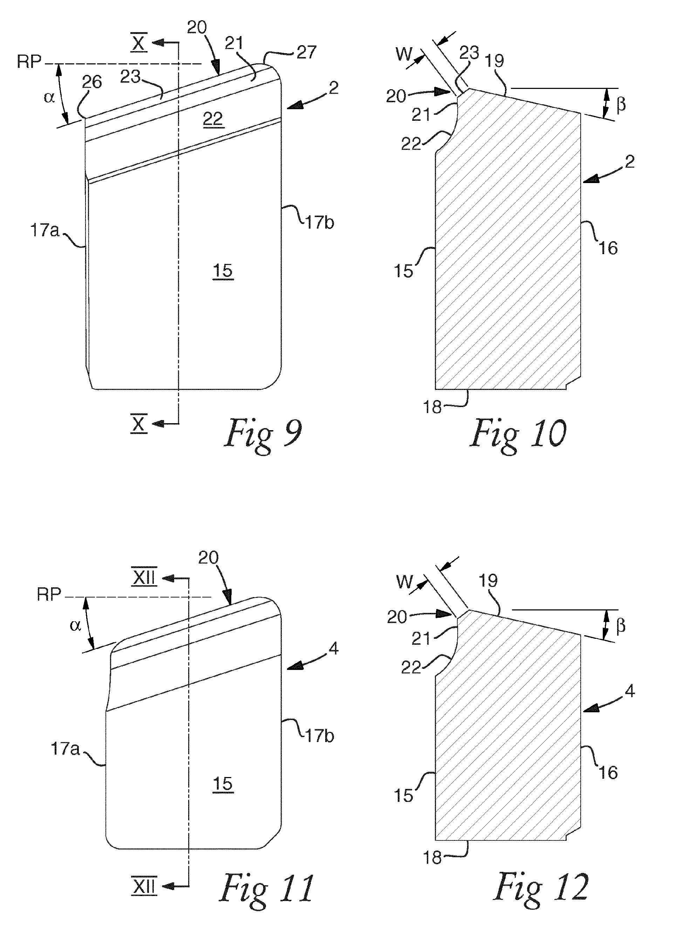

As seen in Fig. 9, the cutting edge 20 is inclined at an angle α to the reference plane RP. In the example, α amounts to 18°, implying that the so-called point angle of the drill amounts to 144° (72° + 72°). In Figs. 10, 12 and 13, it is furthermore seen that the clearance surface 19 has a clearance angle β, which in the example amounts to 12,6°. Because the cutting insert runs parallel to the axial plane AP, the clearance angle β becomes not only nominal, but also functional, i.e., has the same value when the cutting insert is brazed in the appurtenant pocket. In Fig. 13, it is seen that the chip surface 21 forms an acute wedge angle δ with the clearance surface 19. Furthermore, the chip surface 21 extends flat and parallel to the axial plane AP between the transition surface 22 and the chamfer surface 23. In other words, the chip surface 21 forms an angle γ2 of 90° with the reference plane RP. This means that the wedge angle δ between the chip surface 21 and the clearance surface 19 amounts to 77,4° (= 90°-12,6°). Fig. 15 shows another embodiment comprising a chip surface 21, which forms an obtuse angle γ2 with the reference plane RP (i.e., γ2 > 90°). In such a way, a more easy-cutting geometry can be obtained by allowing the chip surface 21 to lean in the backward direction and downward from the chamfer surface 23. This may compensate for the chamfer surface 23 to a certain extent giving a more blunt-cutting cutting edge 20. This embodiment has the same clearance angle β as the embodiment according to Fig. 13, and thereby a more acute wedge angle δ, which also contributes to the more easy-cutting geometry.

Characteristic of the invention is that, in the cutting edge 20, there is included a chamfer surface 23 (see in particular Fig. 13), which is formed between the chip surface 21 and the clearance surface 19 and has a width designated W as well as an angle γ in relation to the reference plane RP. In the example shown, the chamfer surface 23 is flat and extends between two boundary lines 24, 25 running in parallel, the last-mentioned one of which is situated behind the first-mentioned one as viewed in the direction of rotation of the tool. In other words, the chamfer surface 23 has a uniform width along its entire length extension, more precisely from a radially outer end 26 (see Fig. 9) to a radially inner end 27 (which also form the outer and inner ends of the cutting edge 20). The section X-X (as well as the section XII-XII in Fig. 11) may be located along any infinitesimal part or section of the cutting edge. In order to achieve intended effect in respect of the chip breaking, the width W of the chamfer surface 23 should amount to at least 0,1 mm. For the same reasons, the angle γ should amount to at least 25°, however without exceeding 50°. In the example, γ amounts to 37,1°. The reasons for the stipulated threshold values for the angle γ and the stipulated minimum width W will be clear from below.

Now reference is made to the schematic illustrations in Figs. 14 and 15, the first-mentioned one of which illustrates the edge shape of previously known cutting inserts for deep hole drill tools. In this case, the edge shape is markedly acute (even if a diminutive cutting edge-reinforcement would be present between the chip surface 21 and the clearance surface 19). When a chip CH during drilling is removed by means of such a cutting edge, the Pₛₕ of the shear plane, i.e., the boundary line between the undeformed metal of the workpiece and the deformed metal that by shearing begins to form a chip, will have a comparatively great angle ϕ (= the shear plane angle), more precisely in the example approx. 27°. This means in practice that the chip CH - if the feeding is small and the chip thin - will be born and slide forward fairly unresistingly along the chip surface 21. In other words, the chip can curl away without immediately getting any resistance aiming at bending the same.

In Fig. 15, it is shown how the chip is forced to behave as a consequence of the presence of the chamfer surface 23. In this case, the chamfer surface will apply a backpressure to the arriving metal, which reduces the shear plane angle ϕ to a considerably smaller value (in the example approx. 14°). The consequence of this will be that the chip already in connection with its creation is bent out from the chip surface 21 and is curved back to finally be broken up, when it impinges on the surface of the unmachined metal.

Generally, the present cutting edge will be more blunt-cutting with increasing width W of the chamfer surface and/or increasing angle γ. In order to give the desired effect in respect of the reduction of the shear plane angle ϕ - and thereby the ability of the cutting insert to break up the chip - W should amount to at least 0,1 mm. Should the chamfer surface be made considerably smaller than 0,1 mm, the same will rather serve as a cutting edge-reinforcement without essentially affecting the shear plane angle ϕ. As long as the width of the chamfer surface is moderately greater than 0,1 mm, the cutting ability of the cutting edge is acceptable in the light of the improved chip breaking ability. Further increasing the width to at least 0,2 mm will improve the chip breaking ability, but with increasing width, the cutting edge will be increasingly blunt-cutting. For this reason, it is preferred to maximize the width W to 0,5 mm.

In an analogous way, the same applies to the angle γ. Comparatively small angles within the aforementioned angle interval, i.e., angles that are only just slightly greater than 25°, accordingly means that the cutting edge still is fairly easy-cutting, however while forming a fairly large shear plane angle, while greater angles, i.e., angles approaching 50°, improve the chip breaking by the shear plane angle being radically decreased. However, this takes place at the cost of the cutting edge becoming more blunt-cutting. A good compromise may hereby be found by limiting the angle to at least 30° and at most 40°. By the stipulated parameter limits W = 0,1-0,5 mm or preferably 0,2 - 0,5 mm, and γ = 25°-50° or preferably 30°-40° respectively, a good compromise is attained between, on one hand, the desire of good chip breaking, and, on the other hand, the desire to maintain an acceptable cutting ability. According to the invention, at least the peripheral cutting insert 2, and preferably also the intermediate insert 4, is formed with a cutting edge in which a chamfer surface 23 is included. This because the peripheral cutting insert is impaired by the most difficult chip breaking problems, among other things as a consequence of just the peripheral cutting insert moving at a greater orbital velocity than the intermediate insert - which in turn moves at a greater orbital velocity than the centre insert (at one and the same number of revolutions). However, also the centre insert 3 may be formed with the same type of cutting edge, although this is not shown in detail in the drawings.

### Feasible Modifications of the Invention

The invention is not limited only to the embodiment described above and shown in the drawings. Thus, the invention may be applied to drilling tools having replaceable cutting inserts instead of fixed ones. For instance, chip breaking chamfer surfaces of the kind in question may be formed on indexable cutting inserts having a plurality of cutting edges. Furthermore, the chamfer surface in question does not need to be of uniform width along its entire length extension. Neither does the angle need to be equally large along the entire cutting edge. In addition, the shape of the chamfer surface may deviate from the shown, flat shape, e.g. by being made at least slightly concave. In the last-mentioned case, the angle is defined by an imaginary chord between the two boundary lines 24, 25 that determine the width of the chamfer surface in infinitesimal parts along the cutting edge. In addition, the invention may be applied to such deep hole drill tools that include only one cutting insert or one cutting edge. Finally, it should be mentioned that the clearance of the cutting insert from the machined surface can be provided by the cutting insert being located in a tipped-in position in which its front and back sides do not need to be parallel to the axial plane.

## Claims

1. A deep hole drill tool comprising a basic body (1) having a centre axis (C), toward which an imaginary reference plane (RP) extends at a right angle, a cutting insert (2) of a material that is harder than the material of the basic body, and which includes a front side (15), a back side (16), and a cutting edge (20) formed between a chip surface (21) included in the front side (15) and a clearance surface (19), which extends from the chip surface toward the back side, the cutting edge (20) running inward from a peripherally outer end (26) situated along the basic body to an inner end (27), **characterized in that** the chip surface (21) comprises a chamfer surface (23) adjacent to the cutting edge (20) and the clearance surface (19), the chamfer surface (23) having a width (W) of at least 0,1 mm defined between two boundary lines (24, 25), and which, in each infinitesimal part along the cutting edge, forming an angle (γ) of at least 25° and at most 50° with said reference plane (RP).

2. The deep hole drill according to claim 1, **characterized in that** the width (W) of the chamfer surface amounts to at least 0,2 mm.

3. The deep hole drill tool according to claim 1 or 2, **characterized in that** the width (W) of the chamfer surface (23) amounts to at most 0,5 mm.

4. The deep hole drill tool according to any of the preceding claims, **characterized in that** the chamfer surface (23) is forming the angle (γ) of at least 30° and at most 40° with said reference plane (RP).

5. The deep hole drill tool according to any of the preceding claims, **characterized in that** the chamfer surface (23) has a uniform width along its entire length extension.

6. The deep hole drill tool according to any one of the preceding claims, the basic body (1) comprising three seats (12, 13, 14) for the same number of cutting inserts, *viz*. a peripheral cutting insert (2), a centre insert (3), and an intermediate insert (4), as well as a central hollow space (10) for the internal evacuation of chips from the cutting inserts, **characterized in that** at least the cutting edges (20) of the peripheral cutting insert (2) and intermediate insert (4) connects to said chamfer surface (23), which has a width (W) of at least 0,1 mm, preferably at least 0,2 mm, defined between two boundary lines (24, 25), and which, in each infinitesimal part along the cutting edge, forms an angle (γ) of at least 25° and at most 50° with the reference plane (RP).

7. The deep hole drill tool according to any one of the preceding claims, **characterized in that** the front side (15) transforms into the chip surface (21) via a concavely arched transition surface (22) from which the chip surface (21) extends up to the chamfer surface (23).

8. The deep hole drill tool according to claim 7, **characterized in that**, between the transition surface (22) and the chamfer surface (23), the chip surface (21) extends flat and parallel to an axial plane (AP) running parallel to the centre axis (C).

9. The deep hole drill tool according to claim 7, **characterized in that**, between the transition surface (22) and the chamfer surface (23), the chip surface (21) extends angularly with an axial plane (AP) running parallel to the centre axis (C).

10. The deep hole drill tool according to claim 9, **characterized in that**, between the transition surface (22) and the chamfer surface (23), the chip surface (21) forms an obtuse angle (γ2) with the reference plane (RP).

11. A cutting insert for a deep hole drill tool according to any of the previous claims, the cutting insert including a front side (15), a back side (16), and a cutting edge (20) formed between a chip surface (21) included in the front side (15) and a clearance surface (19), which extends from the chip surface toward the back side, **characterized in that** the chip surface (21) includes a chamfer surface (23) adjacent to the cutting edge (20) and the clearance surface (19), the chamfer surface (23) having a width (W) of at least 0,1 mm defined between two boundary lines (24, 25), and which, in each infinitesimal part along the cutting edge, forming an angle (γ) of at least 25° and at most 50° with an imaginary reference plane (RP) extending at a right angle in relation to the centre axis (C) of the deep hole drill tool.

12. The cutting insert according to claim 11, **characterized in that** the width (W) of the chamfer surface amounts to at least 0,2 mm.

13. The cutting insert according to claim 11 or 12, **characterized in that** the width (W) of the chamfer surface (23) amounts to at most 0,5 mm.

14. The cutting insert according to any one of claims 11 - 13, **characterized in that** the chamfer surface (23) is forming the angle (γ) of at least 30° and at most 40° with said reference plane (RP).

15. The cutting insert according to any one of claims 11 - 14, **characterized in that** the chamfer surface (23) has a uniform width along its entire length extension.
